# NEUE EUROPÄISCHE PATENTSCHRIFT

(11) **EP 2 315 503 B2**
(45) Veröffentlichungstag und Bekanntmachung des Hinweises auf die Entscheidung über den Einspruch: **23.06.2021**
(45) Hinweis auf die Patenterteilung: 30.05.2018
(21) Anmeldenummer: 10188877.4
(22) Anmeldetag: 26.10.2010
(51) Int. Cl.: H05B 37/02

(54) **Verfahren und System zur Vergabe von Betriebsadressen für Lichtquellen oder Leuchten**
Method and system for allocating operating addresses to light sources or lights
Procédé et système d'attribution d'adresses de fonctionnement pour sources lumineuses ou lampes

(30) Priorität: 26.10.2009 DE 102009050733
(43) Veröffentlichungstag der Anmeldung: 27.04.2011
(73) Patentinhaber: Zumtobel Lighting GmbH, 6850 Dornbirn (AT)
(72) Erfinder: Boehnel, Michael, 6850, Dornbirn (AT)
(74) Vertreter: Thun, Clemens

(56) Entgegenhaltungen:
- DE-U1-202007 008 363
- GB-A- 2 418 482
- JP-A- 2001 043 983
- JP-A- 2009 238 526
- US-A1- 2004 101 308
- US-A1- 2005 128 751
- US-A1- 2009 051 624
- US-B2- 7 502 034
- PROF. DR. H. BURKHARDT: "Foundations of Picture Recognition and Picture Analysis Pattern Recognition", , 2005, pages 1-28, Retrieved from the Internet: URL:https://Imb.informatik.uni-freiburg.de /lectures/old_Imb/mustererkennung/Englisch e_Folien/index.html

## Beschreibung

Die vorliegende Erfindung betrifft ein Verfahren sowie ein System zur Vergabe von Betriebsadressen für Lichtquellen oder Leuchten, welche Bestandteil eines Beleuchtungs- oder Mediensystems sind.

Moderne und komplexe Gebäude verfügen über umfangreiche Mittel zur Steuerung und Kontrolle der Einrichtungen des Gebäudes. Einerseits bedingt dies einen erhöhten Komfort für die Bewohner oder Benutzer, wenn möglichst viele zu koordinierenden Betriebsfunktionen durch Regelungseinrichtungen unterstützt gesteuert werden, andererseits betrifft die Ausgestaltung der Haustechnik auch die Gebäude- und Betriebssicherheit, sowie Energie- und Kosteneffizienz. Speziell in komplexen Gebäuden, wie z.B. Krankenhäusern, Flughäfen oder auch anderen öffentlichen Gebäuden sind umfangreich regelbare Beleuchtungseinrichtungen vorgesehen. Besonderes dann, wenn variabel zu nutzende Medien- oder Leitsysteme hinzukommen ist die Frage nach flexibel und kosteneffizient veränderbaren Systemen unumgänglich.

Daher hat sich für komplexe Beleuchtungsanlagen oder Mediensysteme die Verwendung von zentralen Steuereinheiten zur Steuerung und Regelung etabliert, mit deren Hilfe der Verdrahtungsaufwand reduziert sowie eine flexible Nutzung und Erweiterung der Systeme gegeben ist. Üblicherweise verfügt eine derartige zentrale Steuereinheit über den Anschluss zu einem Bussystem, welches die Fernsteuerung und Regelung einer Lichtquelle oder Leuchte in einem System der beschriebenen Art ermöglicht.

Zur Kommunikation mit einer Lichtquelle dient in der Regel eine, jeder separat steuerbaren Lichtquelle zugeordnete, individuelle Ursprungsadresse, welche ausreichende Komplexität aufweist um eine Eindeutigkeit zu gewährleisten. Zur Vereinfachung der Kommunikation und Verbesserung der Steuerungs- und Regelungsmöglichkeiten der Beleuchtungsanlage ist üblicherweise vorgesehen, jeder dieser separat steuerbaren Lichtquellen eine spezifische Betriebsadresse mit geringer Komplexität zuzuweisen. Dadurch vereinfacht sich die Kommunikation immens und es entstehen neue Kommunikationsmöglichkeiten und Steuerungsfunktionen, zum Beispiel durch die Adressierung einer Gruppe von Lichtquellen mit Hilfe einer dieser Gruppe zugeordneten Betriebsadresse.

Die Festlegung der Betriebsadressen erfolgt dabei üblicherweise vor oder bei der Installation der Beleuchtungsanlage. Ein gebräuchliches Verfahren zur Vergabe von Betriebsadressen sieht vor eine einzelne Lichtquelle der Beleuchtungsanlage zu einer Signalabgabe zu veranlassen. Anschließend muss durch das Installationspersonal festgestellt werden, welche Lichtquelle das Signal abgegeben hat. Daraufhin wird dieser Lichtquelle eine dem Beleuchtungsanlagenkonzept entsprechende Betriebsadresse zugewiesen. Dies wird solange wiederholt, bis jede separat steuerbare Lichtquelle der Beleuchtungsanlage eine geeignete Betriebsadresse erhalten hat.

Bei einer hohen Anzahl von Lichtquellen - beispielsweise bei einem LED-Mediensystem mit 500x500 Lichtquellen - erweist sich dieses Verfahren jedoch, durch die häufige Wiederholung manueller Arbeitsschritte als ungeeignet.

Aus der US 2009/051624 gehen Verfahren und Vorrichtungen zum Lokalisieren von Signalquellen und Verfahren und Vorrichtungen zum Präsentieren von In formationssignalen unter Verwendung solcher Signalquellen hervor.

Aus der US 2005/128751 gehen Beleuchtungsverfahren und Systeme hervor.

Aus der JP 2001 043983 geht ein Beleuchtungssteuerungssystem hervor.

Aus der US 2004/101308 geht ein System und ein Verfahren für mehrfache, simultane optische Datenkommunikationen. Aus der JP 2009-238526 geht ein Verfahren hervor, bei dem logische Adressen von Leuchten physikalischen Adressen zugeordnet werden.

Aufgabe der vorliegenden Erfindung ist es ein Verfahren zur Vergabe von Betriebsadressen zu verbessen und zu vereinfachen.

Diese Aufgabe wird durch ein Verfahren mit den Merkmalen des Anspruch 1 gelöst. Vorteilhafte Weiterbildungen sind Gegenstand der abhängigen Ansprüche.

Das erfindungsgemäße Verfahren zur Vergabe von Betriebsadressen für Lichtquellen oder Leuchten, welche Bestandteil eines Beleuchtungs- oder Mediensystems sind sieht vor, dass eine Steuereinheit eine Lichtquelle oder Leuchte unter Verwendung einer der Lichtquelle bzw. Leuchte zugeordneten Ursprungsadresse kontaktiert. Ferner veranlasst die Steuereinheit die Lichtquelle oder Leuchte, sich durch Abgabe eines optischen Signals zu identifizieren. Nachfolgend wird die Position der sich identifizierenden Lichtquelle bzw. Leuchte erfasst. Dies erfolgt mit Hilfe von Mitteln zur Erfassung optischer Signale, welche eine Information oder Signal erzeugen und ferner mit Hilfe von Mitteln zur Auswertung dieser Information oder dieses Signals. Auf Basis der so erfassten Position und entsprechend einem Referenzschema des Beleuchtungs- oder Mediensystems, welches eine Zuordnung einer Betriebsadresse zu einer Lichtquellenposition bzw. Leuchtenposition enthält, weist die Steuereinheit der Lichtquelle bzw. Leuchte nun eine Betriebsadresse zu. Die Schritte - Kontaktieren, Identifizieren, Position Erfassen sowie Betriebsadresse Zuweisen - können nun für jede Lichtquelle oder Leuchte erfolgen, die dazu vorgesehen ist eine Betriebsadresse zu erhalten. Die Mittel zur Erfassung optischer Signale weisen eine Kamera auf und die Mittel zur Auswertung des erfassten optischen Signals sind Mittel zur Bildverarbeitung. Die Mittel zur Auswertung der erfassten optischen Signale weisen Mittel zur Mustererkennung auf. Des Weiteren weist das Verfahren vor Ausführung der obigen Schritte zusätzlich folgende Schritte auf: die Steuereinheit kontaktiert alle Lichtquellen bzw. Leuchten und veranlasst diese ein optisches Signal abzugeben; mit Hilfe der Mittel zur Erfassung optischer Signale wird eine Referenzinformation erzeugt, welche die volle Signalinformation des Beleuchtungs- oder Mediensystems umfasst; aus der vollen Signalinformation wird mit Hilfe der Mittel zur Auswertung der erfassten optischen Signale die Anzahl und Position der Lichtquellen bzw. Leuchten ermittelt; anhand der Referenzinformation wird das Referenzschema des Beleuchtungs- oder Mediensystems erstellt, welches die Zuordnung einer Betriebsadresse zu einer Lichtquellenposition bzw. Leuchtenposition enthält.

Erfindungsgemäß, wird ferner ein Adressierungssystem vorgeschlagen, welches eine Steuereinheit aufweist, welche dazu ausgebildet ist, die Lichtquellen bzw. Leuchten unter Verwendung von den Lichtquellen bzw. Leuchten zugeordneten Ursprungsadressen einzeln zu kontaktieren und zu veranlassen, sich durch die Abgabe eines optischen Signals zu identifizieren. Ferner weist das Adressierungssystem Mittel zur Erfassung optischer Signale der sich identifizierenden Lichtquelle oder Leuchte sowie Mittel zur Auswertung der erfassten optischen Signale auf, welche dazu ausgebildet sind durch eine Bewertung des erfassten optischen Signals die Position einer sich identifizierenden Lichtquelle oder Leuchte zu bestimmen. Weiterhin ist die Steuereinheit dazu ausgebildet, auf Basis der durch die Mittel zur Auswertung optischer Signale bestimmten Position der Lichtquelle oder Leuchte und entsprechend einem Referenzschema des Beleuchtungs- oder Mediensystems, welches eine Zuordnung einer Betriebsadresse zu einer Lichtquellenposition bzw. Leuchtenposition enthält, eine Betriebsadresse zuzuweisen. Die Mittel zur Erfassung eines optischen Signals weisen eine Kamera auf und die Mittel zur Auswertung des erfassten optischen Signals sind Mittel zur Bildverarbeitung. Die Mittel zur Auswertung der erfassten optischen Signale weisen Mittel zur Mustererkennung auf. Bevor die Steuereinheit die Lichtquellen bzw. Leuchten einzeln kontaktiert, ist die Steuereinheit weiterhin dazu ausgebildet, alle Lichtquellen bzw. Leuchten zu kontaktieren und zu veranlassen ein optisches Signal abzugeben; die Mittel zur Erfassung optischer Signale sind weiterhin dazu ausgebildet, eine Referenzinformation zu erzeugen, welche die volle Signalinformation des Beleuchtungs- oder Mediensystems umfasst; die Mittel zur Auswertung der erfassten optischen Signale sind weiterhin dazu ausgebildet, aus der vollen Signalinformation die Anzahl und Position der Lichtquellen bzw. Leuchten zu ermitteln; und die Mittel zur Auswertung der erfassten optischen Signale sind weiterhin dazu ausgebildet, anhand der Referenzinformation das Referenzschema des Beleuchtungs- oder Mediensystems zu erstellen, welches die Zuordnung einer Betriebsadresse zu einer Lichtquellenposition bzw. Leuchtenposition enthält.

Nachfolgend soll die Erfindung anhand der beiliegenden Zeichnung näher erläutert werden, wobei gleiche Elemente in allen Darstellungen mit den gleichen Bezugszeichen versehen sind. Es zeigen
- Figur 1: ein erstes Ausführungsbeispiel eines erfindungsgemäßen Adressierungssystems;
- Figur 2: den schematischen Ablauf eines erfindungsgemäßen Verfahrens zur Vergabe einer Betriebsadresse;
- Figur 3: ein weiteres Ausführungsbeispiel eines erfindungsgemäßen Adressierungssystems;
- Figur 4: ein Beispiel einer möglichen Segmentierung des Betriebsadressenbereichs;
- Figur 5: ein weiteres Ausführungsbeispiel eines erfindungsgemäßen Adressierungssystems; und
- Figur 6: Beispiele für zu unterscheidende Leuchtenformen.

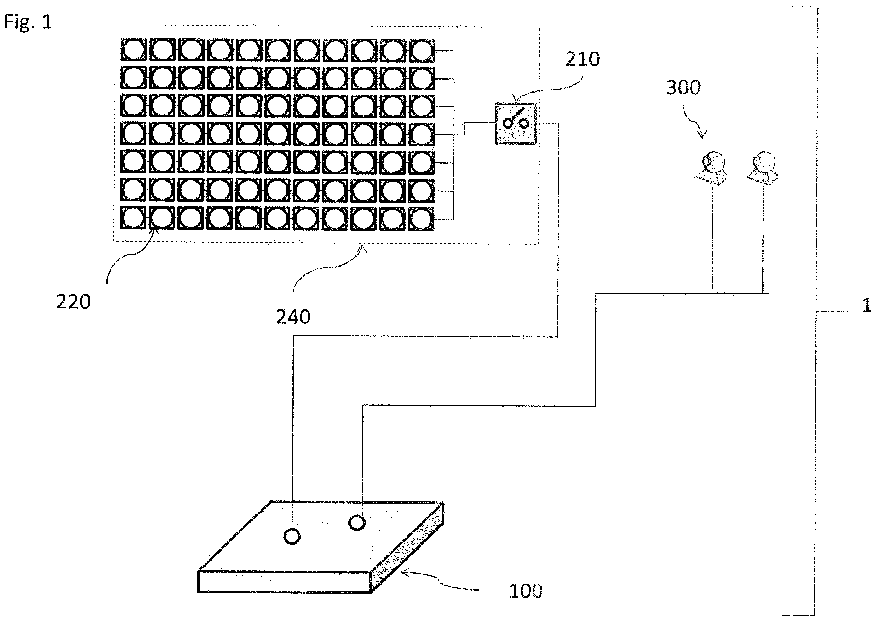

Figur 1 zeigt ein komplexes Mediensystem 240 mit einer Vielzahl von LED-Lichtquellen 220, welche über eine Systemsteuerung individuell angesteuert werden können. Dabei ist vorgesehen den Betriebszustand der LEDs individuell zu steuern, beispielsweise kann neben einer Aktivierung bzw. Deaktivierung insbesondere auch die Veränderung der Helligkeit oder Farbe der LED-Lichtquellen vorgesehen sein.

An einer Wand montiert könnte das Mediensystem beispielsweise zur Anzeige von Werbung gedacht sein. Zur schnellen und flexiblen Darstellung der Werbebotschaft ist es sinnvoll, jeder dieser Vielzahl von LEDs 220 zur Kommunikation mit der Systemsteuerung - insbesondere zur Verbesserung der individuellen Ansteuerbarkeit - eine Betriebsadresse zuzuweisen, wobei diese Betriebsadresse insbesondere die Position der zugehörigen LED 220 in der Anordnung berücksichtigt.

Eine manuelle Vergabe der Betriebsadressen ist bei dieser Vielzahl von Lichtquellen 220 bzw. Leuchten 200 sehr zeitaufwändig und ineffektiv. Mit Hilfe eines erfindungsgemäßen Adressierungssystems 1 kann dies jedoch immens erleichtert und automatisiert werden.

Erfindungsgemäß ist im Ausführungsbeispiel von Figur 1 eine Steuereinheit 100 vorgesehen, welche dazu ausgebildet ist, die LED-Lichtquellen 220 unter Verwendung von den Lichtquellen 220 zugeordneten Ursprungsadressen einzeln zu kontaktieren und diese zu veranlassen, sich durch die Abgabe eines optischen Signals zu identifizieren. Beispielsweise kann das optische Signal darin bestehen, dass die kontaktierte LED aktiviert oder deaktiviert wird.

Ferner weist das Adressierungssystem 1 Mittel zur Erfassung optischer Signale 300 des Mediensystems auf. Im Ausführungsbeispiel handelt es sich dabei um eine Kamera 300, welche vorzugsweise dazu ausgebildet ist ein optisches Signal in ein elektrisches Signal oder eine Folge von elektrischen Signalen zu konvertieren, vorzugsweise zu digitalisieren. Weiterhin weist das Adressierungssystem 1 Mittel zur Auswertung der erfassten optischen Signale auf, welche dazu ausgebildet sind durch eine Bewertung des erfassten optischen Signals die Position einer sich identifizierenden LED-Lichtquelle 220 zu bestimmen. Dies ist bei einer Abbildung der LED-Leuchtquellen 220 durch eine Kamera 300 in besonders einfacher Weise möglich, da die geometrische Position unmittelbar aus der Position der kontaktierten LED in der Abbildung bestimmt werden kann, und besonders vorteilhafte Algorithmen zur Positionsbestimmung wie z.B. Methoden der Bildverarbeitung verwendet werden können.

Weiterhin ist die Steuereinheit 100 dazu ausgebildet, auf Basis der durch die Mittel zur Auswertung der erfassten optischen Signale bestimmten Position der LEDs eine Betriebsadresse zuzuweisen. Im Ausführungsbeispiel erfolgt die Ansteuerung der LEDs über ein Kontrollelement 210 des Mediensystems, welches dazu ausgebildet ist, jede LED einzeln zu steuern und eine Ursprungsadresse für jede einzeln ansteuerbare LED wiederzugeben, sowie eine Betriebsadresse für jede LED-Lichtquelle des Mediensystems 240 zu empfangen. Vorzugsweise bildet sich die geometrische Position der LEDs in der zugewiesenen Betriebsadresse ab, beispielsweise kann die Betriebsadresse dann auch eine Koordinateninformation, welche einer Position einer LED in einer Zeile bzw. Spalte des Mediensystems 240 entspricht, enthalten. Dies stellt eine Möglichkeit dar, auf besonders einfache Art und Weise eine Betriebsadresse geeignet festzulegen.

Neben der Vergabe von Betriebsadressen für ein Mediensystem ist darüber hinaus die Anwendung für eine Vielzahl von Beleuchtungs- und/oder Mediensysteme denkbar. Beispielsweise könnte es sich um eine in eine Wand oder Fassade eines Hauses bzw. Gebäudes integrierte Beleuchtungsanlage mit einer Vielzahl von Lichtquellen oder Leuchten dargestellt handeln. Diese können zur Informationsdarstellung wie im Falle des im Ausführungsbeispiel von Figur 1 beschriebenen Mediensystems dienen und/oder auch Allgemeinbeleuchtungszwecken genügen. Beispielsweise könnte eine Betriebsadressvergabe für eine Wand dieser Art mit minimalem Systemaufwand durch nur eine Kamera erfolgen. In komplexeren Gebäudeabschnitten oder bei einem Beleuchtungssystem, welches sich über mehrere Räume erstreckt, kann eine Verwendung mehrerer Kameras besonders sinnvoll sein.

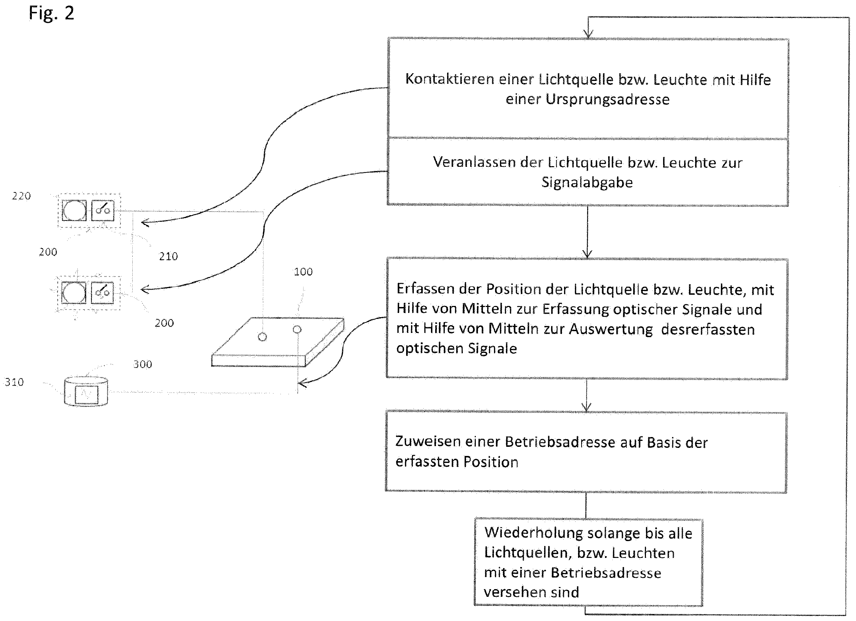

In Figur 2 ist schematisch der Verlauf eines erfindungsgemäßen Verfahrens zur Vergabe von Betriebsadressen für Lichtquellen 220 oder Leuchten 200, welche Bestandteil eines Beleuchtungs- oder Mediensystems sind, dargestellt.

Zunächst kontaktiert eine Steuerungseinheit 100 eine Lichtquelle 220 bzw. Leuchte. Die Kontaktierung erfolgt dabei mit Hilfe einer der Lichtquelle 220 bzw. Leuchte 200 zugeordneten Ursprungsadresse, welche der Steuerungseinheit 100 vor Beginn des erfindungsgemäßen Verfahrens bekannt ist. Beispielsweise könnte die Steuerungseinheit 100 zuvor mittels bidirektionaler Kommunikation mit Kontrollelementen 210, zuerst eine Anfrage an alle Lichtquellen 220 bzw. Leuchten 200 richten ihre Ursprungsadressen mitzuteilen und die erhaltene Information anschließend speichern.

Diese Ursprungsadresse kann einerseits eine gerätespezifische vom Hersteller der Lichtquelle 220 oder Leuchte 200 bei der Produktion eindeutig kodierte Adresse sein. Darüber hinaus ist aber auch denkbar eine Ursprungsadresse - z.B. ähnlich dem DALI Standard - zufällig erzeugen zu lassen. In beiden Fällen ist diese Ursprungsadresse der Steuereinheit 100 vor Beginn des erfindungsgemäßen Verfahrens zur Vergabe einer Betriebsadresse bekannt.

Durch die Steuereinheit 100 wird die Lichtquelle 220 bzw. Leuchte 200 kontaktiert und veranlasst ein optisches Signal abzugeben. Beispielsweise kann die Signalabgabe der Lichtquelle 220 oder Leuchte 200 darin bestehen, dass ein Ein- oder Ausschalten bzw. Dimmen der Lichtquelle 220 oder Leuchte 200 erfolgt. Die Signalabgabe ist dabei vorzugsweise an die Steuerungs- und Regelungsmöglichkeiten einer Kontrolleinheit 210, welche den Betriebszustand einer Lichtquelle 220 Leuchte 200 steuert und regelt angepasst.

Ferner wird mit Hilfe von Mitteln zur Erfassung optischer Signale 300 sowie mit Hilfe von Mitteln zur Auswertung der erfassten optischen Signale die Position der sich identifizierenden Lichtquelle 220 bzw. Leuchte 200 erfasst.

Bei der erfassten Position handelt es sich vorzugsweise um die geometrische Lage einer Lichtquelle 220 oder Leuchte 200 relativ zu einem Ursprungspunkt. Dabei kann es vorteilhaft sein, mehrere Ursprungspunkte, welche sich beispielsweise durch Lage in verschiedenen Räumen oder Gebäudeteilen oder auch Leuchten bzw. Mediensystemen auszeichnen, vorzusehen. Insbesondere sind verschiedene Ausgestaltungsvarianten der Positionsinformation denkbar, welche - wie im weiteren erläutert - vornehmlich durch die Mittel zu Erfassung eines optischen Signals oder deren Zusammenwirken bedingt sind.

Weiterhin wird auf Basis der ermittelten Position dann durch die Steuereinheit 100 eine Betriebsadresse der zur Signalabgabe veranlassten Lichtquelle 220 oder Leuchte 200 zugewiesen.

Die Schritte - Kontaktierung, Veranlassen einer optischen Signalabgabe, Erfassen eines optischen Signals, Auswertung des erfassten Signals, Ermitteln der Position, sowie Zuweisung einer Betriebsadresse auf Basis der Position - können nun nacheinander für andere Lichtquellen 220 oder Leuchten 200, wiederholt werden, solange, bis jede zum Empfang einer Betriebsadresse vorgesehene Lichtquelle 220 oder Leuchte 200 eine geeignete Betriebsadresse aufweist.

Beispielsweise könnte ferner vorgesehen sein, dass die Kommunikation der Steuereinheit 100 mit den Mitteln zur Erfassung optischer Signale 300 über das Kommunikationsnetz des Beleuchtungs- oder Mediensystems erfolgt.

In dem in Figur 1 dargestellten Ausführungsbeispiel weist die Steuereinheit 100 zur Anbindung der Mittel zur Erfassung optischer Signale 300 jedoch eine von der Anbindung der Lichtquellen 220 oder Leuchten 200 getrennte Schnittstelle auf. Besonders vorteilhaft kann dadurch unmittelbar sichergestellt werden, dass das erfasste optische Signal 310 mit hoher Bandbreite unabhängig von der Kommunikation mit den Lichtquellen 220 bzw. Leuchten 200 die Steuereinheit 100 zur Auswertung, besonders vorteilhaft ohne Zeitverzögerung, erreicht. Ferner ist somit eine schnelle Anwendbarkeit des Verfahrens gewährleistet, da die Anordnung der Mittel zur Erfassung optischer Signale 300 auch nur vorläufiger Natur sein kann. Insbesondere ist keine komplizierte Einbindung in das Kommunikationsnetz des Beleuchtungs-oder Mediensystems notwendig, so dass das erfindungsgemäße Verfahren flexibel und leicht erweiterbar eingesetzt werden kann.

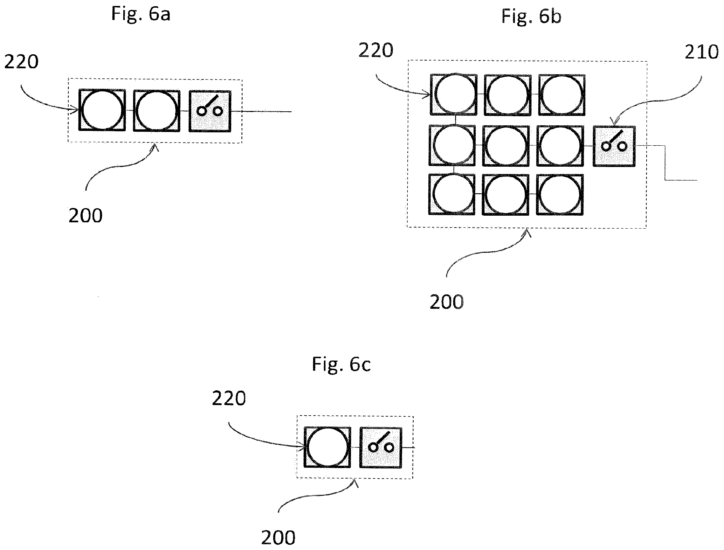

Gemäß der Erfindung weisen die Mittel zur Erfassung optischer Signale 300 eine Kamera auf. Erfindungsgemäß ist dabei vorgesehen, dass die Mittel zur Auswertung der erfassten optischen Signale Mittel zur Bildverarbeitung sind. Die Mittel zur Auswertung der erfassten optischen Signale weisen Mittel der Mustererkennung auf, die beispielsweise in der Lage sind, zwischen, exemplarisch in Figur 6a) -c) dargestellten, verschiedenen Lichtquellen- oder Leuchtenarten zu unterscheiden. Desweiteren kann es sich in einer vorteilhaften Weiterbildung bei den Mitteln zu Bildverarbeitung um Mittel zur Kontrast- oder Differenzbildanalyse handeln, sodass beispielsweise das Signal einer zuvor zur Signalabgabe aktivierten Lichtquelle 220 oder Leuchte 200 vor Erfassung optischer Signale im Falle der nächsten Wiederholung des Verfahrens für eine weitere Lichtquelle 220 oder Leuchte 200 nicht abgeschaltet werden muss. In diesem Fall kann besonders vorteilhaft vorgesehen sein, die Positionsinformation durch die geometrische Lage in einem Raum zu beschreiben, dabei kann es sich auch in einer erfindungsgemäßen Weiterbildung um die geometrische Relativbeziehung zu markanten Ursprungspunkten oder der Lichtquellen 220 bzw. Leuchten 200 untereinander handeln.

In einer Weiterbildung des Erfindungsgedankens können andere oder weitere Mittel zur Erfassung eines optischen Signals 300 vorgesehen sein. Beispielsweise kann es sich dabei um Helligkeitssensoren oder Farbsensoren handeln. Die Position der Lichtquellen 220 oder Leuchten 200 wird dabei durch die Lage und Anordnung des Sensors beschrieben. Die Auswertung besteht dann vorzugsweise auch in der Wiedergabe dieser Lage und Anordnung. Mit einem oder mehreren Sensoren dieser Art, welche beispielsweise einen gerichteten Erfassungsbereich aufweisen können, besteht die Möglichkeit, durch Anwendung des erfindungsgemäßen Verfahrens eine Wiederspiegelung in der Betriebsadresse für bestimmte Helligkeitsverläufe in einem Raum zu finden. Beispielsweise könnten alle Lichtquellen oder Leuchten, welche die Erfassung eines charakteristischen Helligkeitswerts an einem bestimmten Sensor hervorrufen und somit eine charakteristische Position haben, mit identischer Betriebsadresse versehen sein.

Desweiteren ist denkbar, dass die Mittel zur Erfassung eines optischen Signals 300 dazu ausgebildet sind spektrale Anteile eines erfassten Signals von einander zu separieren. Besonders vorteilhaft kann dies auch nachfolgend mit Mitteln zur Auswertung der von den Mitteln zur Erfassung optischer Signale erzeugten Information erfolgen. Dies kann dazu dienen verschiedene Arten von Lichtquellen, beispielsweise in einer Medienanlage mit Betriebsadressen aus unterschiedlichen Adressbereichen zu versehen. Somit ist durch diese Weiterbildung die Möglichkeit geschaffen, beispielsweise in einem Mediensystem eine verbesserte Automatisierung der Betriebsadressvergabe zu erreichen, beispielsweise durch Separation des Betriebsadressraumes für rote, grüne oder blaue Lichtquellen.

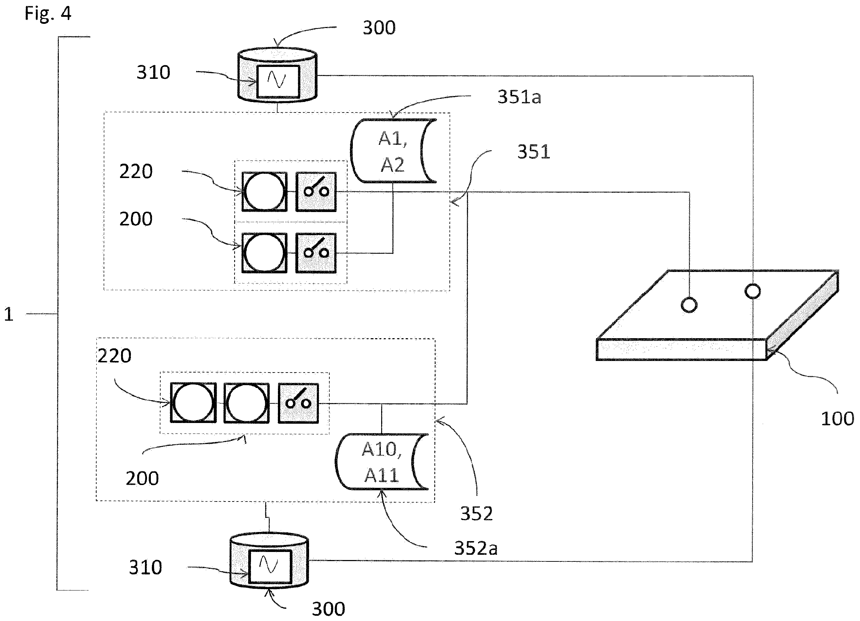

In Figur 4 ist eine vorteilhafte Weiterbildung eines Verfahrens zur Vergabe von Betriebsadressen angedeutet. Die Betriebsadresse wird dabei durch eine Segmentinformation 351a, 352a bestimmt, wobei die Segmentinformation durch einen Erfassungsbereich 351, 352 eines der Mittel zur Erfassung optischer Signale festgelegt wird. Die Positionsinformation besteht dabei in einer charakteristischen Zuordnung der Lichtquelle 220 oder Leuchte 200 zu einem bestimmten Segment, sodass die Segmentinformation Bestandteil der Positionsinformation wird.

Ferner kann vorgesehen sein, dass die Betriebsadresse, welche einer Position einer Lichtquelle 220 oder Leuchte 200 zugeordnet ist durch Vergleich der Position mit einer dieser Position zugordneten Information einer Referenzdatenquelle 110 festgelegt wird. Vorzugsweise stellt die Referenzdatenquelle ein schematisches Abbild der Beleuchtungs- oder Medienanlage in der Art zur Verfügung, dass die Anzahl und Art der Lichtquellen bzw. Leuchten zumindest in Teilabschnitten bestimmt ist. Darüber hinaus ist beispielsweise vorgesehen in einer der Auswertung der erfassten optischen Signale angepassten Art und Weise die Positionsinformation einer Betriebsadresse zuzuordnen. Insbesondere ist eine Konsistenz der Metrik notwendig. Darüber hinaus stellt die Referenzdatenquelle vorzugsweise auch Informationen zu Ursprungsadressen von Leuchten 200 oder Lichtquellen 220 des Beleuchtungs- oder Mediensystems zur Verfügung. Und fernerhin erfolgt vorzugsweise die Vergabe der Betriebsadressen mit Hilfe der Referenzdatenquelle vollautomatisch.

Ferner ist bei dem erfindungsgemäßen Verfahren vorgesehen, dass zunächst vor Ausführung des vorbeschriebenen Verfahrens alle Lichtquellen 220 oder Leuchten 200 von der Steuereinheit 100 kontaktiert werden und veranlasst werden, ein optisches Signal abzugeben. Dies dient zur Erfassung einer umfassenden Referenzinformation, welche mit Hilfe der Mittel zur Erfassung optischer Signale 300 um die Position und Anzahl der Lichtquellen 220 bzw. Leuchten 200 ergänzt ist und dementsprechend ein Abbild der Komponenten des Beleuchtungs-oder Mediensystems darstellt. Hierbei sind Mittel zur Mustererkennung als Mittel zur Auswertung vorgesehen, welche die erfasste Position der Leuchten einem für die erkannten Muster charakteristischen Betriebsadressenbereich zuordnen.

Hervorzuheben ist, dass auch durch die Kombination der Ausgestaltungsvarianten des erfindungsgemäßen Verfahrens sich eine einfache Anpassung des Verfahrens an unterschiedliche Beleuchtungs- und Medienanlagen realisieren lässt. So ist beispielsweise die Kombination einer wie oben beschriebenen segmentierten Betriebsadressvergabe mit einer Vergabe unterstützt durch Informationen aus einer Referenzdatenquelle oder in Verbindung mit einer Mustererkennung besonders vorteilhaft.

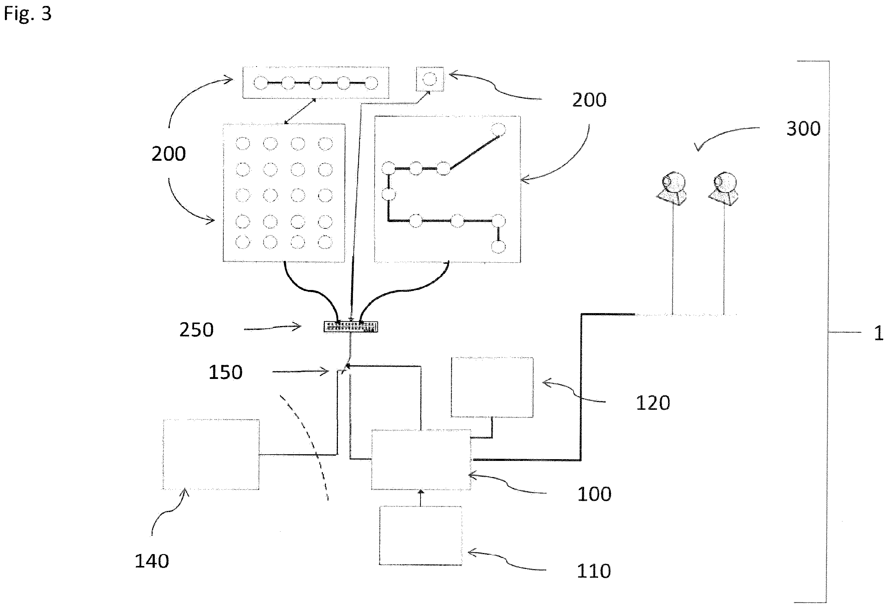

Das in Figur 3 dargestellte Beleuchtungs- oder Mediensystem kann dabei mit einer Vielzahl unterschiedlicher Leuchten 200 oder Lichtquellen 220 realisiert sein. Beispielsweise kann es sich dabei um eine Linearleuchte - z.B. auch in Figur 6a dargestellt - eine Fächenleuchte (Fig. 6b), eine Einzelleuchte (Fig. 6c) oder eine freie Leuchtenanordnung handeln. Insbesondere ist auch die Ausgestaltung als Lichtquellen- bzw. LED-Kette oder einem, aus einer Vielzahl von Lichtquellen 220 gebildetem Anzeigeelement, beispielsweise in einem Stadion denkbar.

Diese Vielzahl von unterschiedlichen Lichtquellen 220 oder Leuchten 200 ist an die Steuereinheit 100 direkt oder indirekt angeschlossen.

Desweiteren sind die Mittel zur Erfassung optischer Signale 300 im Ausführungsbeispiel von Figur 3 als Kameras ausgebildet.

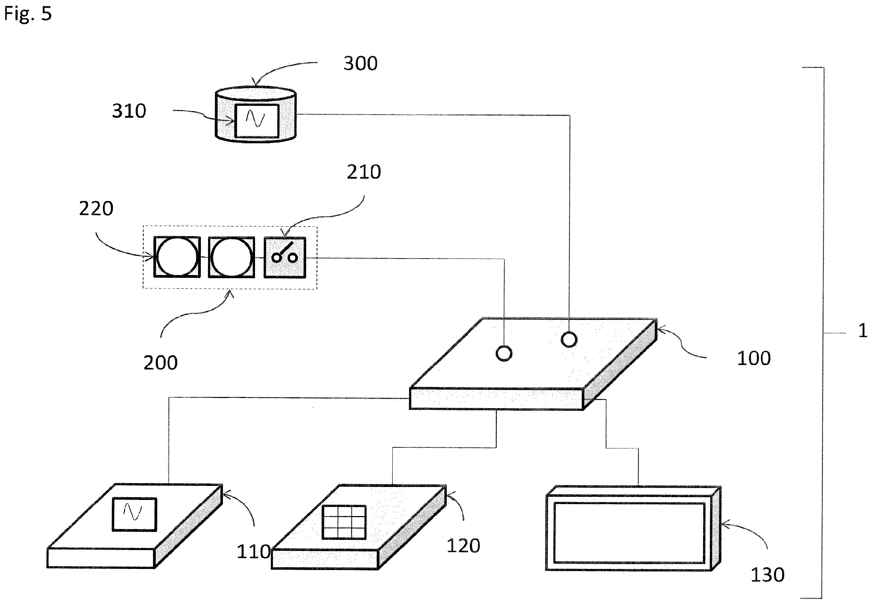

Ferner weist das Adressierungssystem 1 im Ausführungsbeispiel von Figur 3 oder 5 eine Referenzdatenquelle 110 auf, welche dazu ausgebildet ist eine der Position einer Leuchte 200 oder Lichtquelle 220 zugeordnete Referenzinformation, insbesondere die Betriebsadresse der Lichtquelle 220 oder Leuchte 200 an die Steuereinheit 100 zu übermitteln. Somit können auf einfache Art und Weise bei der Planung der Beleuchtungs- oder Medienanlage erstellte Zuordnungen bei der Vergabe von Betriebsadressen berücksichtigt werden. Die Integration einer Referenzdatenquelle 110 ermöglicht somit eine verbesserte automatische Vergabe von Betriebsadressen.

So kann nun gemäß dem Ausführungsbeispiel von Figur 3 die relativ zum Erfassungsbereich der Kamera bestimmte Position mit einem durch die Referenzdatenquelle 110 zur Verfügung gestellten Beleuchtungs-oder Mediensystemabbild verglichen werden. Und so auf besonders einfache Art und Weise eine Betriebsadresse für die kontaktierte Leuchte bestimmt und zugewiesen werden.

Desweiteren ist im Ausführungsbeispiel von Figur 3 oder 5 eine optionale Benutzerschnittstelle 120 vorgesehen. Diese kann dazu dienen, ergänzende Korrekturen bei der Vergabe der Betriebsadressen durchzuführen. Beispielsweise könnte eine unzureichende Auswertung oder Erfassung der optischen Signale der Lichtquellen 220 oder Leuchten 200 dazu führen, dass ein manueller Eingriff in die Adressvergabe erforderlich ist.

In einer Weiterbildung kann jedoch auch vorgesehen sein, dass über die Benutzerschnittstelle 120 grundlegende Vorkonfigurationen zur Betriebsadressvergabe durchgeführt werden. Die kann beispielsweise die Festlegung eines zugewiesenen Betriebsadressraumes betreffen, sowie die Auswahl eines geeigneten Algorithmus, beispielsweise könnte zwischen Mustererkennung, Segmentierung und Referenzdatenquelle 110 umgeschaltet werden. Ebenso könnte die Auswahl verschiedener Mittel zur Erfassung eines optischen Signals mit Hilfe der Benutzerschnittstelle 120 durchgeführt werden.

Beispielsweise ist es weiterhin möglich, dass die Zuordnung einer relativ zum Erfassungsbereich der Kamera ermittelten Position vorbestimmten Werten der Referenzdatenquelle 110 nicht eindeutig zugeordnet werden kann. So kann durch manuelle Korrektur diese mangelnde Eindeutigkeit aufgelöst werden, und gleichzeitig führt dies bei wiederholter Anwendung eines erfindungsgemäßen Verfahrens zur Vergabe von Betriebsadressen dazu, dass mit Hilfe des Ausschlussprinzips eine größere Genauigkeit in der Zuordnung der weiteren Lichtquellen 220 oder Leuchten 200 zu Informationen der Referenzdatenquelle 110 gegeben ist.

Ergänzend kann das Adressierungssystem 1 ein Visualisierungselement 130 wie beispielsweise in Figur 5 dargestellt aufweisen, welches vorzugsweise zur Darstellung der Betriebsparameter, oder beispielsweise zur Darstellung der erfassten optischen Signale ausgebildet ist.

Einerseits kann die Steuereinheit 100 zur Vergabe von Betriebsadressen in eine Systemsteuerung 140 des Beleuchtungssystems, welche zur Steuerung des Betriebsablaufs des Beleuchtungssystems dient, integriert sein. Dies ist ebenso für die Referenzdatenquelle 110, die Benutzerschnittstelle 120, und das Visualisicrungselement 130 denkbar. Es kann jedoch auch vorgesehen sein, dass sich die Steuereinheit 100 des Adressierungssystems 1 in einem selbständigen Gehäuse befindet. Die Umschaltung zwischen einem Betrieb des Beleuchtungs- oder Mediensystems mit Hilfe einer Systemsteuerung 140 und einer Vergabe von Betriebsadressen durch die Steuereinheit 100 kann dann beispielsweise durch eine Umschalteinheit 150 erfolgen. Jedoch ist auch ein einfaches Umstecken der zugehörigen Kommunikationsleitung von der Systemsteuerung 140 zur Steuereinheit 100 denkbar.

Vorzugsweise ist vorgesehen, dass nur wenige Kommunikationswege zu berücksichtigen sind. Insbesondere verringert sich bei wenigen vorzugsweise einheitlichen Kommunikationswegen der konstruktive Aufwand für die Steuereinheit 100 erheblich. Deshalb ist in einer Weiterbildung der Erfindung vorgesehen, dass das Adressierungssystem 1 in geeigneter Weise Multiplexer, Demultiplexer sowie Splitter 250 aufweist. Vornehmlich wird dabei eine Vereinheitlichung des Kommunikationsweges sowie eine Reduzierung des Installationsaufwandes der Beleuchtungsanlage angestrebt. Beispielsweise könnte ein Beleuchtungssystem Lichtquellen 220 oder Leuchten 200 aufweisen, welche zur Kommunikation mit Hilfe von WLAN, Artnet, DMX oder RDM ausgebildet sind, so dass ein nicht unerheblicher Aufwand resultiert um die Kommunikation uber eine Vielzahl unterschiedlicher Schnittstellentypen sicherzustellen. Üblicherweise sind deshalb nur wenige Vorzugsschnittstellen verschiedenen Typs in die Steuereinheit 100 integriert. Zur Erweiterung der Kommunikationsfähigkeit der Steuereinheit 100 ist dann der Einsatz van Splittern und Multiplexern 250 besonders sinnvoll.

Mit Hilfe der Erfindung wird also ein Verfahren sowie ein Adressierungssystem 1 zur Vergabe von Betriebsadressen zur Verfügung gestellt, welches auf einfache Weise eine automatische Vergabe von Betriebsadressen ermöglicht. Die Erfindung bedingt eine einfache, schnelle und flexible Vergabe vaon Betriebsadressen für eine Vielzahl von Lichtquellen oder Leuchten, so dass eine wesentliche Verbesserung erreicht ist.

## Patentansprüche

1. Verfahren zur Vergabe von Betriebsadressen für Lichtquellen oder Leuchten, welche Bestandteil eines Beleuchtungs- oder Mediensystems sind, wobei das Verfahren folgende Schritte aufweist:
a) eine Steuereinheit (100) kontaktiert eine Lichtquelle (220) bzw. Leuchte (200) unter Verwendung einer der Lichtquelle bzw. Leuchte zugeordneten Ursprungsadresse und veranlasst diese, sich durch Abgabe eines optischen Signals zu identifizieren;
b) mit Hilfe von Mitteln zur Erfassung optischer Signale (300) und Mitteln zur Auswertung der erfassten optischen Signale wird die Position der sich identifizierenden Lichtquelle (220) bzw. Leuchte (200) erfasst;
c) die Steuereinheit (100) weist der sich identifizierenden Lichtquelle (220) bzw. Leuchte (200) auf Basis der in Schritt b) erfassten Position und entsprechend einem Referenzschema des Beleuchtungs- oder Mediensystems, welches eine Zuordnung einer Betriebsadresse zu einer Lichtquellenposition bzw. Leuchtenposition enthält, eine Betriebsadresse zu;
d) die Schritte a) bis c) werden wiederholt, bis allen Lichtquellen (220) bzw. Leuchten (200) entsprechende Betriebsadressen zugewiesen wurden,
wobei die Mittel zur Erfassung optischer Signale (300) eine Kamera aufweisen und die Mittel zur Auswertung des erfassten optischen Signals Mittel zur Bildverarbeitung sind,
wobei die Mittel zur Auswertung der erfassten optischen Signale Mittel zur Mustererkennung aufweisen, und
wobei das Verfahren vor Ausführung der Schritte a)-d) zusätzlich folgende Schritte aufweist:
- die Steuereinheit (100) kontaktiert alle Lichtquellen (220) bzw. Leuchten (200) und veranlasst diese ein optisches Signal abzugeben;
- mit Hilfe der Mittel zur Erfassung optischer Signale (300) wird eine Referenzinformation erzeugt, welche die volle Signalinformation des Beleuchtungs- oder Mediensystems umfasst;
- aus der vollen Signalinformation wird mit Hilfe der Mittel zur Auswertung der erfassten optischen Signale die Anzahl und Position der Lichtquellen (220) bzw. Leuchten (200) ermittelt;
- anhand der Referenzinformation wird das Referenzschema des Beleuchtungs- oder Mediensystems erstellt, welches die Zuordnung einer Betriebsadresse zu einer Lichtquellenposition bzw. Leuchtenposition enthält.

2. Verfahren nach Anspruch 1,
**dadurch gekennzeichnet, dass**
die Steuereinheit (100) zur Anbindung der Mittel zur Erfassung optischer Signale eine von der Anbindung der Lichtquellen (220) bzw. Leuchten (200) getrennte Schnittstelle aufweist.

3. Adressierungssystem zur Vergabe von Betriebsadressen für Lichtquellen oder Leuchten, welche Bestandteil eines Beleuchtungs- oder Mediensystems sind, aufweisend:
a) eine Steuereinheit (100), welche dazu ausgebildet ist, die Lichtquellen (220) bzw. Leuchten (200) unter Verwendung von den Lichtquellen (220) bzw. Leuchten (200) zugeordneten Ursprungsadressen einzeln zu kontaktieren und zu veranlassen, sich durch die Abgabe eines optischen Signals zu identifizieren;
b) Mittel zur Erfassung optischer Signale (300) des Beleuchtungs- oder Mediensystems;
c) Mittel zur Auswertung der erfassten optischen Signale, welche dazu ausgebildet sind durch eine Bewertung der erfassten optischen Signale die Position einer sich identifizierenden Lichtquelle (220) bzw. Leuchte (200) zu bestimmen;
wobei die Steuereinheit (100) weiterhin dazu ausgebildet ist, auf Basis der durch die Mittel zur Auswertung der erfassten optischen Signale bestimmten Position der sich identifizierenden Lichtquelle (220) bzw. Leuchte (200) und entsprechend einem Referenzschema des Beleuchtungs- oder Mediensystems, welches eine Zuordnung einer Betriebsadresse zu einer Lichtquellenposition bzw. Leuchtenposition enthält, eine Betriebsadresse zuzuweisen,
wobei die Mittel zur Erfassung eines optischen Signals (300) eine Kamera aufweisen und die Mittel zur Auswertung des erfassten optischen Signals Mittel zur Bildverarbeitung sind,
wobei die Mittel zur Auswertung der erfassten optischen Signale Mittel zur Mustererkennung aufweisen, und
wobei, bevor die Steuereinheit (100) die Lichtquellen (220) bzw. Leuchten (200) einzeln kontaktiert,
- die Steuereinheit (100) weiterhin dazu ausgebildet ist, alle Lichtquellen (220) bzw. Leuchten (200) zu kontaktieren und zu veranlassen ein optisches Signal abzugeben;
- die Mittel zur Erfassung optischer Signale (300) weiterhin dazu ausgebildet sind, eine Referenzinformation zu erzeugen, welche die volle Signalinformation des Beleuchtungs- oder Mediensystems umfasst;
- die Mittel zur Auswertung der erfassten optischen Signale weiterhin dazu ausgebildet sind, aus der vollen Signalinformation die Anzahl und Position der Lichtquellen (220) bzw. Leuchten (200) zu ermitteln;
- die Mittel zur Auswertung der erfassten optischen Signale weiterhin dazu ausgebildet sind, anhand der Referenzinformation das Referenzschema des Beleuchtungs- oder Mediensystems zu erstellen, welches die Zuordnung einer Betriebsadresse zu einer Lichtquellenposition bzw. Leuchtenposition enthält.

4. Adressierungssystem nach Anspruch 3,
**dadurch gekennzeichnet, dass**
die Steuereinheit (100) zur Anbindung der Mittel zur Erfassung eines optischen Signals eine von der Anbindung der Lichtquellen (220) bzw. Leuchten (200) getrennte Schnittstelle aufweist.

5. Adressierungssystem nach einem der vorhergehenden Ansprüche 3 bis 4,
**dadurch gekennzeichnet, dass**
das Adressierungssystem (1) eine Benutzerschnittstelle (120) aufweist, insbesondere zur manuellen Korrektur der Positionsinformation oder einer Betriebsadresse.

6. Adressierungssystem nach einem der vorhergehenden Ansprüche 3 bis 5,
**dadurch gekennzeichnet, dass**
das Adressierungssystem (1) ein Visualisierungselement (130) aufweist, welches insbesondere zur Darstellung der Betriebsparameter, sowie zur Darstellung des erfassten optischen Signals ausgebildet ist.

## Claims

1. Method for allocating operating addresses to light sources or lights which are part of an illumination or media system, wherein the method comprises the following steps:
a) a control unit (100) contacts a light source (220) or light (200) by using a source address associated with the light source or light and causes it to identify itself by emitting an optical signal;
b) the position of the light source (220) or light (200) identifying itself is detected with the aid of means for detecting optical signals (300) and means for evaluating the detected optical signals;
c) the control unit (100) assigns an operating address to the light source (220) or light (200) identifying itself on the basis of the position detected in step b) and according to a reference scheme of the illumination or media system which contains an association of an operating address with a light source position or light position;
d) the steps a) to c) are repeated until corresponding operating addresses have been assigned to all light sources (220) or lights (200),
wherein the means for detecting optical signals (300) comprise a camera, and the means for evaluating the detected optical signal are means for image processing,
wherein the means for evaluating the detected optical signals comprise means for pattern recognition, and
wherein the method additionally comprises the following steps before execution of steps a)-d):
- the control unit (100) contacts all light sources (220) or lights (200) and causes them to emit an optical signal;
- with the aid of the means for detecting optical signals (300), reference information is generated which includes the full signal information of the illumination or media system;
- the number and position of the light sources (220) or lights (200) is ascertained from the full signal information with the aid of the means for evaluating the detected optical signals;
- the reference information is used to create the reference scheme of the illumination or media system which contains the association of an operating address with a light source position or light position.

2. Method according to Claim 1,
**characterized in that**
the control unit (100) for connecting the means for detecting optical signals comprises an interface which is separate from the connection of the light sources (220) or lights (200).

3. Addressing system for allocating operating addresses to light sources or lights which are part of an illumination or media system, comprising:
a) a control unit (100) which is designed to individually contact the light sources (220) or lights (200) by using source addresses associated with the light sources (220) or lights (200) and to cause them to identify themselves by emitting an optical signal;
b) means for detecting optical signals (300) of the illumination or media system;
c) means for evaluating the detected optical signals, which are designed to determine the position of a light source (220) or light (200) identifying itself by evaluating the detected optical signals;
wherein the control unit (100) is furthermore designed to assign an operating address on the basis of the position, determined by the means for evaluating the detected optical signals, of the light source (220) or light (200) identifying itself and according to a reference scheme of the illumination or media system which contains an association of an operating address with a light source position or light position,
wherein the means for detecting an optical signal (300) comprise a camera, and the means for evaluating the detected optical signal are means for image processing,
wherein the means for evaluating the detected optical signals comprise means for pattern recognition, and
wherein, before the control unit (100) individually contacts the light sources (220) or lights (200),
- the control unit (100) is furthermore designed to contact all light sources (220) or lights (200) and to cause them to emit an optical signal;
- the means for detecting optical signals (300) are furthermore designed to generate reference information including the full signal information of the illumination or media system;
- the means for evaluating the detected optical signals are furthermore designed to ascertain the number and position of the light sources (220) or lights (200) from the full signal information;
- the means for evaluating the detected optical signals are furthermore designed to create, on the basis of the reference information, the reference scheme of the illumination or media system which contains the association of an operating address with a light source position or light position.

4. Addressing system according to Claim 3,
**characterized in that**
the control unit (100) for connecting the means for detecting an optical signal comprises an interface which is separate from the connection of the light sources (220) or lights (200).

5. Addressing system according to one of the preceding Claims 3 to 4,
**characterized in that**
the addressing system (1) comprises a user interface (120), especially for manually correcting the position information or an operating address.

6. Addressing system according to one of the preceding Claims 3 to 5,
**characterized in that**
the addressing system (1) comprises a visualization element (130) which is designed especially to display the operating parameters and to display the detected optical signal.

## Revendications

1. Procédé d'attribution d'adresses de fonctionnement pour sources lumineuses ou lampes, qui sont des composants d'un système d'éclairage ou de média, le procédé présentant les étapes suivantes :
a) une unité de commande (100) entre en contact avec une source lumineuse (220) ou une lampe (200) en utilisant une adresse d'origine associée à la source lumineuse ou lampe et l'amène à s'identifier par émission d'un signal optique ;
b) à l'aide de moyens de détection de signaux optiques (300) et de moyens d'évaluation des signaux optiques détectés, la position de la source lumineuse (220) ou de la lampe (200) qui s'identifie est détectée ;
c) l'unité de commande (100) attribue à la source lumineuse (220) ou la lampe (200) qui s'identifie, sur la base de la position détectée à l'étape b) et d'une manière correspondant à un schéma de référence du système d'éclairage ou de média, qui contient une affectation d'une adresse de fonctionnement à une position de source lumineuse ou une position de lampe, une adresse de fonctionnement ;
d) les étapes a) à c) sont répétées jusqu'à ce que des adresses de fonctionnement correspondantes soient attribuées à toutes les sources lumineuses (220) ou lampes (200),
les moyens de détection de signaux optiques (300) présentant une caméra et les moyens d'évaluation du signal optique détectée étant des moyens de traitement d'images,
les moyens d'évaluation des signaux optiques détectés présentant des moyens de reconnaissance des formes et
le procédé, avant la réalisation des étapes a) à d), présentant en outre les étapes suivantes :
- l'unité de commande (100) entre en contact avec toutes les sources lumineuses (220) ou lampes (200) et les amène à émettre un signal optique ;
- à l'aide de moyens de détection de signaux optiques (300), une information de référence est créée, qui comprend la totalité des informations de signaux du système d'éclairage ou de média ;
- à partir de la totalité des informations de signaux, à l'aide des moyens d'évaluation des signaux optiques détectés, le nombre et la position des sources lumineuses (220) ou des lampes (200) sont déterminés ;
- en utilisant l'information de référence, le schéma de référence du système d'éclairage ou de média est créé, lequel contient l'affectation d'une adresse de fonctionnement à une position de source lumineuse ou position de lampe.

2. Procédé selon la revendication 1,
**caractérisé en ce que**
l'unité de commande (100) présente, pour la connexion des moyens de détection de signaux optiques, une interface séparée de la connexion des sources lumineuses (220) ou lampes (200).

3. Système d'adressage pour l'attribution d'adresses de fonctionnement pour sources lumineuses ou lampes, qui sont des composants d'un système d'éclairage ou de média, comportant :
a) une unité de commande (100), qui est conçue pour entrer en contact individuellement avec les sources lumineuses (220) ou lampes (200) en utilisant des adresses d'origine associées aux sources lumineuses (220) ou lampes (200) et pour les amener à s'identifier par l'émission d'un signal optique ;
b) des moyens de détection de signaux optiques (300) du système d'éclairage ou de média ;
c) des moyens d'évaluation des signaux optiques détectés, lesquels sont conçus pour déterminer, par une évaluation des signaux optiques détectés, la position d'une source lumineuse (220) ou d'une lampe (200) qui s'identifie ;
l'unité de commande (100) étant en outre conçue pour attribuer une adresse de fonctionnement sur la base de la position, déterminée par les moyens d'évaluation des signaux optiques détectés, de la source lumineuse (220) ou de la lampe (200) qui s'identifie et d'une manière correspondant à un schéma de référence du système d'éclairage ou de média, qui contient une affectation d'une adresse de fonctionnement à une position de source lumineuse ou une position de lampe,
les moyens de détection d'un signal optique (300) présentant une caméra et les moyens d'évaluation du signal optique détectée étant des moyens de traitement d'images,
les moyens d'évaluation des signaux optiques détectés présentant des moyens de reconnaissance des formes et,
avant que l'unité de commande (100) entre en contact avec les sources lumineuses (220) ou lampes (200) de manière individuelle,
- l'unité de commande (100) étant en outre conçue pour entrer en contact avec toutes les sources lumineuses (220) ou lampes (200) et les amener à émettre un signal optique ;
- les moyens de détection de signaux optiques (300) étant en outre conçus pour créer une information de référence, qui comprend la totalité des informations de signaux du système d'éclairage ou de média ;
- les moyens d'évaluation des signaux optiques détectés étant en outre conçus pour déterminer, à partir de la totalité des informations de signaux, le nombre et la position des sources lumineuses (220) ou lampes (200) ;
- les moyens d'évaluation des signaux optiques détectés étant en outre conçus pour créer, à l'aide des informations de référence, le schéma de référence du système d'éclairage ou de média, qui contient l'affectation d'une adresse de fonctionnement à une position de source lumineuse ou une position de lampe.

4. Système d'adressage selon la revendication 3,
**caractérisé en ce que**
l'unité de commande (100) présente, pour la connexion des moyens de détection d'un signal optique, une interface séparée de la connexion des sources lumineuses (220) ou lampes (200).

5. Système d'adressage selon l'une quelconque des revendications précédentes 3 à 4,
**caractérisé en ce que**
le système d'adressage (1) présente une interface utilisateur (120), en particulier pour la correction manuelle des informations de position ou d'une adresse de fonctionnement.

6. Système d'adressage selon l'une quelconque des revendications précédentes 3 à 5,
**caractérisé en ce que**
le système d'adressage (1) présente un élément de visualisation (130), qui est conçu en particulier pour la représentation du paramètre de fonctionnement, comme pour la représentation du signal optique détecté.
